# EUROPÄISCHE PATENTSCHRIFT

(11) **EP 3 686 037 B1**
(45) Veröffentlichungstag und Bekanntmachung des Hinweises auf die Patenterteilung: **05.01.2022**
(21) Anmeldenummer: 19207337.7
(22) Anmeldetag: 06.11.2019
(51) Int. Cl.: B60C 13/00

(54) **FAHRZEUGLUFTREIFEN**
PNEUMATIC TYRE
PNEUMATIQUES DE VÉHICULE

(30) Priorität: 28.01.2019 DE 102019201006
(43) Veröffentlichungstag der Anmeldung: 29.07.2020
(73) Patentinhaber: Continental Reifen Deutschland GmbH, 30165 Hannover (DE)
(72) Erfinder: Bogenschütz, Peter, 30419 Hannover (DE); Bispo, Miguel, 30419 Hannover (DE); Zimmermann, Fabian, 30419 Hannover (DE); Winkler, Jens, 30419 Hannover (DE)
(74) Vertreter: Continental Corporation

(56) Entgegenhaltungen:
- EP-B1- 2 408 628
- DE-T2- 69 701 494
- JP-A- 2016 088 220
- US-A- 5 932 052

## Beschreibung

Die Erfindung betrifft einen Fahrzeugreifen mit einem Laufstreifen und zumindest einer Seitenwand, auf deren Oberfläche zumindest ein Zeichen als Schriftzeichen oder Design-Element in einem abgegrenzten Flächenelement ausgebildet ist, welches Zeichen eine Struktur bzw. Oberflächenbeschaffenheit aufweist, die sich von der Struktur bzw. Oberflächenbeschaffenheit der umgebenden Oberflächenbereiche unterscheidet oder welches gegenüber den umgebenden Oberflächenbereichen als oberflächliche Vertiefung oder Erhebung gestaltet ist.

Fahrzeugreifen weisen auf ihren Seitenwänden üblicherweise Schriftzeichen oder Design-Elemente auf. Schriftzeichen benennen beispielsweise den Hersteller oder den Brand-Namen des Reifens oder bei drehrichtungsgebundenen Reifen die Drehrichtung bei Vorwärtsfahrt. Design-Elemente sind beispielsweise Logos der Fahrzeugreifenhersteller. Die Oberflächenbeschaffenheit dieser Zeichen und Designelemente unterscheidet sich von der Oberflächenbeschaffenheit des umgebenden Oberflächenmaterials, um einen Kontrast zu erzeugen und die Lesbarkeit und Erkennbarkeit der Schriftzeichen und Designelemente sicherzustellen. Der Kontrast wird üblicherweise durch Reflexion und/oder Schattenwurf gebildet. Es ist bekannt, unterschiedliche Oberflächenbeschaffenheit auf Seitenwänden bei der Vulkanisation des Reifens in einer Vulkanisationsform auszubilden, beispielsweise durch gezieltes Einprägen von Schraffuren und/oder Ausbilden von glatten Flächenbereichen innerhalb von Schraffuren oder durch Ausbilden von flachen Erhebungen oder Vertiefungen.

Ein in einer Vulkanisationsform vulkanisierter Fahrzeugreifen mit Seitenwänden, die auf ihrer Oberfläche Informationen aufweisen, welche als Textur - gemeint ist insbesondere eine Rauigkeit, ein Relief oder eine Struktur wie eine Schraffur - innerhalb einer glatten Seitenwandoberfläche oder welche vice versa als glatte Seitenwandoberfläche innerhalb einer Textur ausgebildet sind, ist beispielsweise aus der DE 10 2017 209 900 A1 bekannt. Seitenwandschraffuren mit gestalterischen Elementen auf Seitenwänden von Fahrzeugreifen sind beispielsweise aus der DE 10 2013 108 786 A1 und der DE 10 2016 218 486 A1 bekannt.

Es ist ferner bekannt, die Seitenwände von Fahrzeugreifen farblich zu gestalten. So ist beispielsweise aus der US 6,030,676 B eine dekorative, mehrschichte Auflage für Reifenseitenwände bekannt, die aus einer wässrigen Emulsion, einer Lage mit Farbpigmenten und einer transparenten Deckschicht besteht. Die speziell ausgeführte, wässrige Emulsion soll eine gute Anhaftung auf der Oberfläche der Reifenseitenwand bewirken und ein Einwandern von Bestandteilen aus dem schwarzen Gummimaterial der Seitenwand in die farblich gestaltete Auflage vermeiden. Aus der EP 2 629 968 B1 ist ferner ein Verfahren zur Herstellung von farbigen Elementen auf Fahrzeugreifen bekannt, bei welchem die Reifenoberfläche mittels Laser angeraut wird, anschließend wird eine Schutzschicht durch Auftragen einer wässrigen Emulsion gebildet und auf diese wird eine farbige Schicht aufgetragen. Die wässrige Emulsion enthält mindestens eine vernetzbare Polymerbasis und ein Tensid einer bestimmten Molekularformel. Das derart hergestellte farbige Flächenelement kann anschließend mittels Laser in einem Endbearbeitungsschritt bearbeitet werden. Darüber hinaus sind selbstklebende, farbige Reifenaufkleber, die beispielsweise den Herstellernamen wiedergeben, bekannt und im Handel erhältlich.

Aus der US 5 932 052 A ist ein Verfahren bekannt, bei welchem ein Label auf Erhebungen aufgebracht wird, die auf einer Seitenwand eines Fahrzeugreifens ausgebildet sind. Die Oberflächen der Erhebungen werden mit einem Fettentferner oder einem Lösungsmittel gesäubert. Anschließend wird ein Haftmittel auf die Oberflächen der Erhebungen aufgebracht. Nach Trocknen des Haftmittels wird auf die Oberflächen der Erhebungen eine Folie aufgelegt, welche aus einer mittleren Metallschicht, einer ersten Schicht und einer Haftschicht besteht, wobei die Folie mit ihrer Haftschicht auf die Oberflächen gelegt wird. Die Folie wird an die Oberflächen angedrückt und mittels eines erhitzten Bügeleisens erwärmt, wodurch sich die Haftschicht der Folie mit dem Haftmittel auf den Oberflächen verbindet. Die Folie wird abgezogen, wobei Folienstücke an den Kontaktbereichen zu den Oberflächen der Erhebungen zurückbleibt.

Die JP 2016 088 220 A offenbart einen Fahrzeugluftreifen mit Seitenwänden, wobei auf einer Seitenwand zumindest eine Erhebung ausgebildet ist. Es sind Bereiche, welche die Erhebung umgeben, eingefärbt, wodurch die Sichtbarkeit der Erhebung verbessert sein soll. Zum Einfärben können verschiedene Drucktechniken eingesetzt werden.

Aus der EP 2 408 628 B1 ist ein Fahrzeugluftreifen bekannt, welcher einen Laufstreifen mit zumindest einer zur Laufstreifenperipherie geöffneten Vertiefung aufweist, in welcher ein farbiges Element eingeklebt ist. Der Reifen lässt sich dadurch entsprechend dekorieren und individualisieren.

Aus der DE 697 01 494 T2 ist ein Fahrzeugluftreifen mit einem farbigen Motiv bekannt, welches auf einem Träger eines Abziehbildes hergestellt wird und durch Wärmeübertragung auf die Außenfläche des Reifens aufgebracht wird. Der Reifen weist auf jeder Außenfläche ein Reliefelement auf, wobei das Motiv derart aufgebracht wird, dass sich das Relief in Ausschnitte des Trägers einfügt.

Werden die bekannten farbigen Reifenmarkierungen im Laufe eines Reifenlebens beschädigt oder unansehnlich, so gehen die ursprünglichen Informationen und der Designeffekt komplett verloren.

Der Erfindung liegt daher die Aufgabe zugrunde, einen Fahrzeugreifen der eingangs genannten Art auf besonders einfache Weise derart farbig zu gestalten, dass er den erwähnten Nachteil nicht aufweist.

Gelöst wird die gestellte Aufgabe erfindungsgemäß dadurch, dass auf ein, zumindest ein Zeichen enthaltendes Flächenelement ein farblich gestaltetes Label anhaftend aufgebracht ist, welches das Flächenelement bedeckt und in optisch gleicher Form und Anordnung sämtliche im Flächenelement ausgebildete Zeichen wiedergibt.

Gemäß der Erfindung ist daher auf zumindest einem auf der Seitenwand, beispielsweise aus einer Schraffur gebildeten Schriftzeichen, einem Dekor-Element oder auf einem Flächenelement, welches zumindest ein Schriftzeichen oder ein Dekor-Element, etwa ebenfalls als Schraffur ausgebildet, enthält, ein farblich gestaltetes Label aufgebracht. Ein Label, welches ein Flächenelement, beispielsweise in der Gestalt eines Kreisringabschnittes, bedeckt, enthält sämtliche Schriftzeichen und/oder Dekor-Elemente des Flächenelementes in einer äußeren Form und Anordnung, die mit dem "Original" auf der Seitenwand übereinstimmt. Ist das Label etwa durch Abrieb, Beschädigung oder willkürliches Entfernen zum Teil oder nicht mehr vorhanden, ist die Information bzw. das Design-Element nach wie vor auf der Reifenseitenwand vorhanden und erkennbar.

Das Label kann vorteilhafterweise auch bei einzelnen Schriftzeichen oder Logos oder sonstigen Design-Elementen ein- oder mehrfarbig gestaltet sein.

Ein Label, welches ein Flächenelement bedeckt, ist bevorzugt derart ausgeführt, dass es das bzw. die Zeichen in einer farblichen Gestaltung wiedergibt, die sich von der Farbe der umgebenden Oberflächenbereiche der Seitenwand unterscheidet bzw. abhebt, wobei der das/die Zeichen umgebende Teil des Labels in Schwarz bzw. in der Farbe der Seitenwand ausgeführt ist.

Bei einer weiteren bevorzugten Ausführung kann bei einem Label, welches ein Flächenelement bedeckt, der das/die Zeichen umgebende Teil des Labels farblich derart ausgeführt sein, dass er sich von der Farbe der Seitenwand unterscheidet bzw. abhebt.

Bei einer besonders vorteilhaften Ausgestaltung bzw. Ausführung ist das Label derart ausgeführt und anhaftend aufgebracht, dass es der Struktur des von ihm bedeckten Oberflächenbereiches bzw. Zeichens folgt. Ist die Struktur beispielsweise eine Schraffur mit Erhebungen und Vertiefungen, ist das Label einem "Farbanstrich" gleich auf die Flanken der Erhebungen bzw. Vertiefungen und dadurch besonders gut haltbar aufgebracht.

Besonders haltbar sind ferner Labels, welche mittels eines Klebers, insbesondere eines thermisch aktivierten Klebers, anhaftend aufgebracht sind. Besonders einfach ist das Aufbringen eines Labels, welches mittels einer eine thermisch aktivierbare Kleberschicht aufweisende, entsprechend farblich bedruckten Transferfolie aufgebracht wird.

Weitere Merkmale, Vorteile und Einzelheiten der Erfindung werden nun anhand der schematischen Zeichnung, die Ausführungsbeispiele darstellt, näher beschrieben. Dabei zeigen
Fig. 1a einen Umfangsabschnitt einer Seitenwand eines Fahrzeugluftreifens,
Fig. 1b den Umfangsabschnitt aus Fig. 1 mit einer Ausführungsvariante der Erfindung,
Fig. 2a und 2b im Querschnitt unterschiedliche Ausführungsvarianten der Oberflächenbeschaffenheit eines Zeichens und der umgebenden Seitenwandoberfläche und
Fig. 3a und 3b in zu Fig. 1a und 1b analogen Darstellungen eine weitere Ausführungsvariante der Erfindung.

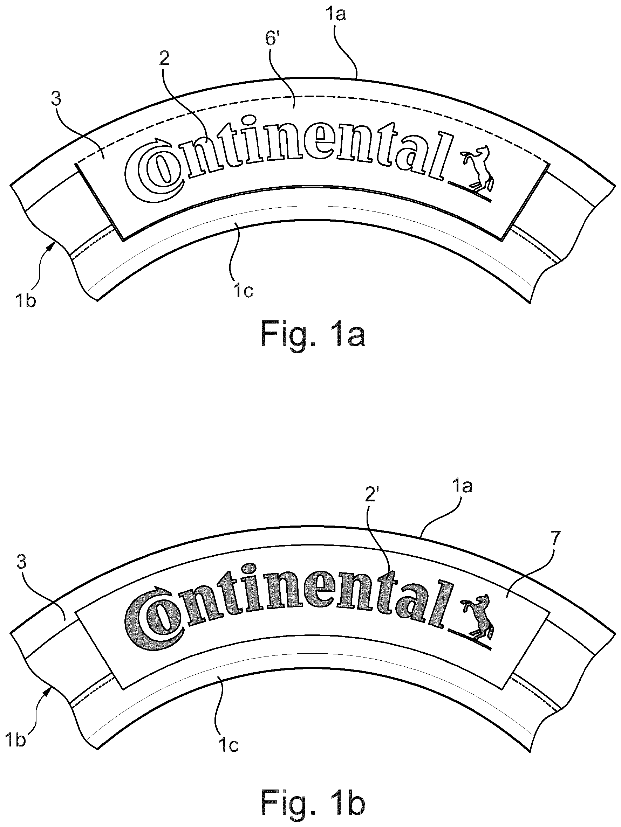

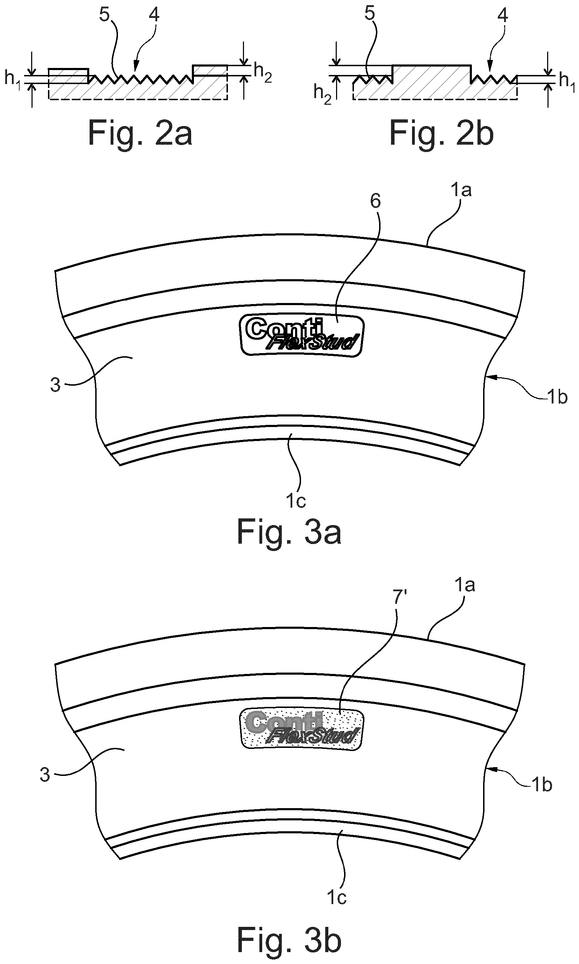

Die Figuren 1a und 1b sowie die Figuren 3a und 3b zeigen Ansichten von Umfangsabschnitten einer Seitenwand 1b eines Fahrzeugluftreifens für Personenkraftwagen in Radialbauart. Dargestellt sind der Auslauf eines Laufstreifes 1a, die Seitenwand 1b und ein Wulstbereich 1c. Der Fahrzeugluftreifen weist ansonsten die üblichen Bauteile auf, die jedoch nicht dargestellt sind.

Fig. 1a zeigt jenen Umfangschnitt der Seitenwand 1b, auf welchem bei der Vulkanisation des Fahrzeugluftreifens in einer Vulkanisationsform in an sich bekannter Weise ein Schriftzug und ein Logo, hier beispielhaft der Schriftzug CONTINENTAL mit Pferd als Logo, eingeprägt worden sind.

Fig. 2a und Fig. 2b zeigen anhand von Schnittdarstellungen beispielhaft mögliche Ausführungen bzw. Ausgestaltungen der einzelnen Schriftzeichen 2 des Schriftzuges CONTINENTAL und des Logos sowie der die Schriftzeichen 2 bzw. das Logo unmittelbar umgebenden Seitenwandoberfläche 3, wobei gemäß einer bevorzugten Ausführung sämtliche Schriftzeichen 2 des Schriftzuges die gleiche Oberflächenbeschaffenheit aufweisen. Wie Fig. 2a zeigt, kann die Oberflächenbeschaffenheit der einzelnen Schriftzeichen 2 und des Logos eine Struktur sein, insbesondere eine Schraffur 4, die Oberflächenbeschaffenheit der Flächenelementes 6 mit glatter Oberfläche, die Schriftzeichen 2 des Schriftzuges FlexStud sind beispielsweise von Schraffuren, wie beschrieben, gebildet.

In Fig. 1b ist ein Flächenelement 6' (in Fig. 1a angedeutet) in der Gestalt eines Kreisringabschnittes, welches die Schriftzeichen 2 des Schriftzuges CONTINENTAL und das Logo enthält, mit einem Label 7 bedeckt, welche deckungsgleich die Schriftzeichen 2 des Schriftzuges CONTINENTAL und das Logo wiedergibt. Das Label 7 ist im Beispiel derart farblich gestaltet, dass seine Schriftzeichen 2' sowie das Logo in einer Farbe sind, die sich vom schwarzen Gummimaterial der Seitenwand 1b deutlich abhebt und unterscheidet, beispielsweise in Weiß oder Orange. Die Schriftzeichen 2' sowie das Logo können auch mehrfarbig oder in unterschiedlichen Farben ausgeführt sein. Der die Schriftzeichen 2' und das Logo umgebende Teil des Labels 7 ist im Bespiel in Schwarz bzw. in der Farbe der Seitenwand ausgeführt, kann jedoch auch eine andere Farbe oder mehrere andere Farben aufweisen. Das Label 7 ist derart anhaftend aufgebracht, dass es der Struktur der Schriftzeichen 2, also etwa einer Schraffur, und der Struktur des bedeckten umgebenden Oberflächenbereiches folgt und somit diese Strukturen nach wie vor erkennen lässt. Bei einer alternativen Ausführung sind die einzelnen Schriftzeichen 2 des Schriftzuges CONTINENTAL sowie das Logo jeweils mit einem separaten, entsprechend dem jeweiligen Schriftzeichen 2 bzw. Logo ausgestalteten Label bedeckt.

Bei der in Fig. 3b gezeigten Ausführung ist ein einziges, farblich gestaltetes Label 7' deckungsgleich mit dem Flächenelement 6 auf das Flächenelement 6 aufgebracht und gibt in gleicher Form und Anordnung die Schriftzüge Conti und FlexStud, wie am Flächenelement 6, wieder. Dabei ist beispielsweise der Hintergrund des Labels 7' in einer hellen Farbe, etwa in Weiß, gehalten, die Schriftzeichen 2' der Schriftzüge Conti und FlexStud in beliebigen anderen, sich vom Hintergrund abhebenden Farben, beispielsweise in Schwarz oder Orange.

Die Labels 7, 7' werden insbesondere nach dem bekannten Verfahren der Label-Transfer-Application aufgebracht. Dabei wird auf eine transparente Basis- bzw. Transferfolie zuerst eine Hartwachsschicht aufgebracht, auf welche eine flexible Farbschicht (seitenverkehrt) in der entsprechenden ein- oder mehrfarbigen Ausgestaltung der Labels 7, 7' aufgedruckt wird, auf welche eine ebenfalls flexible und bei ca. 110°C thermisch aktivierbare Kleberschicht aufgebracht wird. Das betreffende Label wird folgendermaßen auf die Seitenwand 1b aufgebracht: Unter Druck und bei ca. 130°C presst ein Stempel das Label auf die Reifenseitenwand, der Kleber wird dadurch aktiviert und die Transferfolie kann abgelöst werden. Schriftzeichen eines Schriftzuges bildende, separate Labels können entsprechend gestaltet auf einer einzigen Transferfolie ausgebildet sein.

Die aufgebrachten Labels 7, 7' sind einige Monate haltbar und halten in diesem Zeitraum auch automatischen Autowäschen stand. Sollten die Labels 7, 7' mit der Zeit beschädigt sein oder ist ein Entfernen grundsätzlich erwünscht, so lassen sich die Labels 7, 7', etwa mit einem Heißluftföhn, rückstandsfrei entfernen. Im Anschluss daran kann neuerlich das entsprechende Label über eine Transferfolie aufgebracht werden.

Anstelle von Schriftzeichen oder Logos wie in den dargestellten und beschriebenen Beispielen können dekorative Designs oder Design- Elemente auf den Seitenwänden ausgebildet sein, die ebenfalls deckungsgleich mit ein- oder mehrfarbigen Labels überdeckt oder bedeckt werden können. Bereiche mit unterschiedlicher Oberflächenbeschaffenheit können auch am bereits fertig vulkanisierten Reifen durch Gravieren, etwa mittels Laser, gebildet werden.

### Bezugsziffernliste

- 1a: Laufstreifen
- 1b: Seitenwand
- 1c: Wulstbereich
- 2, 2': Schriftzeichen
- 3: Oberfläche Seitenwand
- 4: Schraffur
- 5: Erhebung
- 6, 6': Flächenelement
- 7, 7': Label
- h₁, h₂: Höhe

## Patentansprüche

1. Fahrzeugreifen mit einem Laufstreifen und zumindest einer Seitenwand (1b), auf deren Oberfläche zumindest ein Zeichen als Schriftzeichen (2) oder Design-Element in einem abgegrenzten Flächenelement (6) ausgebildet ist, welches Zeichen eine Struktur bzw. Oberflächenbeschaffenheit aufweist, die sich von der Struktur bzw. Oberflächenbeschaffenheit der umgebenden Oberflächenbereiche unterscheidet oder welches gegenüber den umgebenden Oberflächenbereichen als oberflächliche Vertiefung oder Erhebung gestaltet ist,
**dadurch gekennzeichnet,**
**dass** auf ein, zumindest ein Zeichen enthaltendes Flächenelement (6, 6') ein farblich gestaltetes Label (7, 7') anhaftend aufgebracht ist,
welches das Flächenelement (6, 6') bedeckt und in optisch gleicher Form und Anordnung sämtliche im Flächenelement (6) ausgebildete Zeichen wiedergibt.

2. Fahrzeugreifen nach Anspruch 1, **dadurch gekennzeichnet, dass** das Label (7, 7') ein- oder mehrfarbig gestaltet ist.

3. Fahrzeugreifen nach Anspruch 1 oder 2, **dadurch gekennzeichnet, dass** ein Label (7), welches ein Flächenelement (6') bedeckt, das/die Zeichen in einer farblichen Gestaltung wiedergibt, die sich von der Farbe der umgebenden Oberflächenbereiche der Seitenwand (1b) unterscheidet bzw. abhebt, wobei der das/die Zeichen umgebende Teil des Labels (7) in Schwarz bzw. in der Farbe der Seitenwand (1b) ausgeführt ist.

4. Fahrzeugreifen nach Anspruch 1 oder 2, **dadurch gekennzeichnet, dass** bei einem Label (7'), welches ein Flächenelement (6) bedeckt, der das/die Zeichen umgebende Teil des Labels (7) farblich derart ausgeführt ist, dass er sich von der Farbe der Seitenwand (1b) unterscheidet bzw. abhebt.

5. Fahrzeugreifen nach einem der Ansprüche 1 bis 4, **dadurch gekennzeichnet, dass** das Label (7, 7') derart anhaftend aufgebracht ist, dass es der Struktur des von ihm bedeckten Oberflächenbereiches bzw. Zeichens folgt.

6. Fahrzeugreifen nach einem der Ansprüche 1 bis 5, **dadurch gekennzeichnet, dass** das Label (7, 7') mittels eines Klebers, insbesondere eines thermisch aktivierten Klebers, anhaftet.

7. Fahrzeugreifen nach einem der Ansprüche 1 bis 6, **dadurch gekennzeichnet, dass** das Label (7, 7') mittels einer eine thermisch aktivierbare Kleberschicht aufweisenden, entsprechend farblich bedruckten Transferfolie aufgebracht worden ist.

## Claims

1. Pneumatic tyre comprising a tread and at least one sidewall (1b), on the surface of which at least one mark is formed as characters (2) or a design element in a delimited area element (6), which mark has a structure or surface finish that differs from the structure or surface finish of the surrounding surface regions or which is designed as a superficial depression or elevation with respect to the surrounding surface regions,
**characterized**
**in that** adhesively attached to an area element (6, 6') containing at least one mark there is a coloured label (7, 7'), which covers the area element (6, 6') and reproduces all of the marks formed in the area element (6) in a visually identical form and arrangement.

2. Vehicle tyre according to Claim 1, **characterized in that** the label (7, 7') is of a single-coloured or multi-coloured design.

3. Vehicle tyre according to Claim 1 or 2, **characterized in that** a label (7) which covers an area element (6') reproduces the mark/marks in a coloured design that differs or stands out from the colour of the surrounding surface regions of the sidewall (1b), the part of the label (7) that surrounds the mark/marks being made black or the same colour as the sidewall (1b).

4. Vehicle tyre according to Claim 1 or 2, **characterized in that**, in the case of a label (7') that covers an area element (6), the part of the label (7) that surrounds the mark/marks is made to be of such a colour that it differs or stands out from the colour of the sidewall (1b).

5. Vehicle tyre according to one of Claims 1 to 4, **characterized in that** the label (7, 7') is adhesively attached in such a way that it follows the structure of the surface region or mark covered by it.

6. Vehicle tyre according to one of Claims 1 to 5, **characterized in that** the label (7, 7') is attached by means of an adhesive, in particular a thermally activated adhesive.

7. Vehicle tyre according to one of Claims 1 to 6, **characterized in that** the label (7, 7') has been applied by means of a transfer film that has a thermally activatable adhesive layer and has been printed in a corresponding colour.

## Revendications

1. Pneumatique de véhicule comprenant une bande de roulement et au moins une paroi latérale (1b) sur la surface de laquelle au moins un signe est formé en tant que caractère (2) ou logo dans un élément de surface délimité (6), lequel signe a une structure ou qualité de surface qui diffère de la structure ou qualité de surface des surfaces environnantes ou qui est conçue comme une dépression ou une élévation superficielle par rapport aux surfaces environnantes,
**caractérisé en ce que**
une étiquette colorée (7, 7'), qui recouvre l'élément de surface (6, 6') et qui reproduit sous une forme et un agencement optiquement identiques tous les signes formés dans l'élément de surface (6), est appliquée de manière adhésive sur un élément de surface (6, 6') contenant au moins un signe.

2. Pneumatique de véhicule selon la revendication 1, **caractérisé en ce que** l'étiquette (7, 7') est conçue en une ou plusieurs couleurs.

3. Pneumatique de véhicule selon la revendication 1 ou 2, **caractérisé en ce qu'**une étiquette (7), qui recouvre un élément de surface (6'), reproduit le ou les signes dans un dessin de couleur qui diffère ou ressort de la couleur des zones de surface environnantes de la paroi latérale (1b), la partie de l'étiquette (7) qui entoure le ou les signes étant réalisée en noir ou dans la couleur de la paroi latérale (1b).

4. Pneumatique de véhicule selon la revendication 1 ou 2, **caractérisé en ce que**, dans le cas d'une étiquette (7') qui recouvre un élément de surface (6), la partie de l'étiquette (7) qui entoure le ou les signes est conçue de manière à différer ou ressortir de la couleur de la paroi latérale (1b).

5. Pneumatique de véhicule selon l'une des revendications 1 à 4, **caractérisé en ce que** l'étiquette (7, 7') est appliquée de manière adhésive de manière à épouser la structure de la zone de surface ou du signe qu'elle recouvre.

6. Pneumatique de véhicule selon l'une des revendications 1 à 5, **caractérisé en ce que** l'étiquette (7, 7') adhère au moyen d'un adhésif, notamment d'un adhésif activé thermiquement.

7. Pneumatique de véhicule selon l'une des revendications 1 à 6, **caractérisé en ce que** l'étiquette (7, 7') a été appliquée au moyen d'un film de transfert comportant une couche adhésive activable thermiquement et imprimé en couleur de manière correspondante.
